# EUROPÄISCHE PATENTSCHRIFT

(11) **EP 1 305 928 B1**
(45) Veröffentlichungstag und Bekanntmachung des Hinweises auf die Patenterteilung: **20.09.2006**
(21) Anmeldenummer: 01956396.4
(22) Anmeldetag: 27.07.2001
(51) Int. Cl.: H04L 29/06, G05B 19/418

(54) **SYSTEM UND VERFAHREN ZUR ÜBERTRAGUNG VON DATEN ÜBER DATENNETZE, INSBESONDERE INTERNET, MIT ASYNCHRONER DATENVERBINDUNG**
SYSTEM AND METHOD FOR TRANSMITTING DATA VIA DATA NETWORKS, IN PARTICULAR, THE INTERNET, USING AN ASYNCHRONOUS DATA CONNECTION
SYSTEME ET PROCEDE POUR TRANSMETTRE DES DONNEES PAR L'INTERMEDIAIRE DE RESEAUX DE DONNEES, NOTAMMENT PAR INTERNET, AU MOYEN D'UNE COMMUNICATION DE DONNEES ASYNCHRONE

(30) Priorität: 03.08.2000 DE 10038557
(43) Veröffentlichungstag der Anmeldung: 02.05.2003
(73) Patentinhaber: SIEMENS AKTIENGESELLSCHAFT, 80333 München (DE)
(72) Erfinder: TALANIS, Thomas, 91336 Heroldsbach (DE); VOLKMANN, Frank, 90475 Nürnberg (DE)
(86) Internationale Anmeldenummer: PCT/DE2001/002851
(87) Internationale Veröffentlichungsnummer: WO 2002/013480

(56) Entgegenhaltungen:
- US-A- 6 020 884
- WOLF K H: "Experiences with HTTP-SELECT and Asynchronous Updates" INTERNET DRAFT, [Online] Juni 1999 (1999-06), Seiten 1-11, XP002181915 Gefunden im Internet: <URL:http://www1.ics.uci.edu/pub/ietf/http /draft-wolf-http-select-00.txt> [gefunden am 2001-10-30]
- MARTIN-FLATIN J -P ET AL: "JAMAP: a Web-based management platform for IP networks" ACTIVE TECHNOLOGIES FOR NETWORK AND SERVICE MANAGEMENT. 10TH IFIP/IEEE INTERNATIONAL WORKSHOP ON DISTRIBUTED SYSTEMS: OPERATIONS AND MANAGEMENT, DSOM'99. PROCEEDINGS (LECTURE NOTES IN COMPUTER SCIENCE VOL.1700), ACTIVE TECHNOLOGIES FOR NETWORK AND SE, Seiten 164-178, XP002181916 1999, Berlin, Germany, Springer-Verlag, Germany ISBN: 3-540-66598-6
- SPREITZER M ET AL: "HTTP Next Generation'" NINTH INTERNATIONAL WORLD WIDE WEB CONFERENCE, AMSTERDAM, NETHERLANDS, 15-19 MAY 2000, [Online] Bd. 33, Nr. 1-6, Seiten 593-607, XP002181917 Computer Networks, June 2000, Elsevier, Netherlands ISSN: 1389-1286
- MOSEDALE D ET AL: "Administering very high volume Internet services" PROCEEDINGS OF THE NINTH SYSTEMS ADMINSTRATION CONFERENCE (LISA IX), PROCEEDINGS OF 9TH USENIX SYSTEMS ADMINSTRATION CONFERENCE, MONTEREY, CA, USA, 17-22 SEPT. 1995, Seiten 95-102, XP002181918 1995, Berkeley, CA, USA, USENIX Assoc, USA
- "An Exploration of Dynamic Documents" NETSCAPE ASSISTANCE, [Online] - 1995 Seiten 1-6, XP002181919 Gefunden im Internet: <URL:http://home.netscape.com/assist/net_s ites/pushpull.html> [gefunden am 2001-10-31]
- COHEN E ET AL: "Managing TCP connections under persistent HTTP" PROCEEDINGS OF THE EIGHT INTERNATIONAL WORLD WIDE WEB CONFERENCE, TORONTO, ONT., CANADA, 11-14 MAY 1999, Bd. 31, Nr. 11-16, Seiten 1709-1723, XP002181920 Computer Networks, 17 May 1999, Elsevier, Netherlands ISSN: 1389-1286
- KHARE R: "Building the perfect beast: dreams of a grand unified protocol" IEEE INTERNET COMPUTING, MARCH-APRIL 1999, IEEE, USA, Bd. 3, Nr. 2, Seiten 89-93, XP002181922 ISSN: 1089-7801

## Beschreibung

Die Erfindung betrifft ein System sowie ein Verfahren zur Übertragung von Daten über Datennetze, insbesondere Internet, mit asynchroner Datenverbindung.

Mit Hilfe von Datennetzen ist es möglich, von beliebigen Rechnern, sogenannten Clients aus, die Zugang zu diesen Datennetzen haben, eine Datenverbindung zu einem Server aufzubauen. Dies gilt insbesondere für das World Wide Web (WWW), welches auch als Internet bezeichnet wird. Die im folgenden verwendeten Begriffe Web- oder Internet-Server bzw. Web- oder Internet-Client dienen zur Verdeutlichung der Zugehörigkeit zum speziellen Datennetz Internet, unterscheiden sich funktionell aber nicht von der Bedeutung der Begriffe Client bzw. Server, die für alle möglichen Datennetze verwendet werden.

Im Internet wird eine Datenverbindung zu einem sogenannten Web- oder Internet-Server aufgebaut. Der Zugriff auf einen Internet-Server erfolgt beispielsweise mit Hilfe bekannter Internet-Browser, z.B. dem Internet Explorer der Firma Microsoft oder dem Netscape Communicator der Firma Netscape. Beim Aufbau einer Datenverbindung von einem sogenannten Web- oder Internet-Client aus wird eine Anfrage, ein sogenannter Request an einen Internet-Server durch Eingabe und Abschicken einer sogenannten URL-Adresse abgegeben. Beim Zustandekommen einer Datenverbindung antwortet der gerufene Internet-Server mit einer sogenannten HTML-Seite (HTML = Hyper Text Markup Language), auch Web-Page genannt. Die sogenannten Web-Clients kommunizieren mit den Web-Servern mittels Transportprotokollen. Jeder Datenverbindung zwischen Web-Client und Web-Server liegt somit ein Anfrage-, ein so genanntes Request-Protokoll und als Reaktion darauf ein Antwort-, ein sogenanntes Response-Protokoll zugrunde. Der Fachartikel Spreitzer, Mike et al.: "HTTP 'Next Generation'", Ninth International World Wide Web Conference, Amsterdam, Niederlande, 15-19 Mai 2000, Bd. 33, Nr. 1-6, Seiten 593-607, Computer Networks, Juni 2000, Elsevier, Niederlande, beschreibt die Entstehung eines Protokoll-Prototypen, welcher zeigt, dass es bei Nutzung üblicher Engineeringmethoden möglich ist, das HTTP-Protokoll gleichzeitig in mehreren Problemfeldern zu verbessern:
1. Die Überlagerung anderer Anwendungsprotokolle über HTTP,
2. Modularität und Erweiterbarkeit,
3. Netzwerkleistungsfähigkeit und -gerechtigkeit,
4. die starre Bindung zwischen Identifiern und Protokollstacks und
5. die Undurchlässigkeit von Firewalls gegenüber geschichtetem Datenverkehr.

Aus dem Fachartikel Martin-Flatin, Jean-Philippe et al.: "JAMAP: a Web-Based Management Platform for IP Networks", Active Technologies for Network and Service Management, 10^{th} IFIP/IEEE International Workshop on Distributed Systems: Operations & Management, DSOM '99, Proceedings (Lecture Notes in Computer Science, Vol. 1700), Seiten 164 bis 178, 1999, Berlin, Springer-Verlag, ist eine Web-basierte Management-Plattform für IP-Netzwerke bekannt. Die Plattform ist mit der Programmiersprache JAVA erstellt. Die Plattform implementiert ein so genanntes Push Model zur Durchführung von planmäßigem Management (d.h. permanente Netzwerkbeobachtung und Datensammlung) und ad hoc-Management (d.h. zeitweise Netzwerküberwachung und Fehlersuche). Die Kommunikation zwischen Agenten und Managern beruht auf HTTP-Übertragungen zwischen JAVA Applets und Servlets über persistente TCP-Verbindungen.

Der Fachartikel Mosedale, Dan et al.: "Administering Very High Volume Internet Services", Proceedings of the Ninth Systems Administration Conference (LISA IX), Monterey, Kalifornien, USA, 17.-22. September 1995, Seiten 95 bis 102, 1995, Berkeley, Kalifornien, USA, beschreibt Konfigurationstechniken, um die Leistungsfähigkeit von Internet-Servern, insbesondere von in einem Verbund zusammengeschlossenen Servern, möglichst gut auszunutzen.

Die US-A-6 020 884 beschreibt ein System und ein Verfahren zur Verbesserung einer Internet Browser-Anwendung. Dabei werden Präferenzen eines Anwenders bestimmt und die Interaktion des Anwenders mit anderen Anwendern, welche ähnliche Präferenzen haben und in einer so genannten Community zusammengeschlossen sind, erleichtert, indem dem Community zugeordnete Inhalte Verknüpfungen zu online-Inhalten erhalten und synchrone und asynchrone Interaktionen mit den Anwendern der Community erfolgen.

Der Erfindung liegt die Aufgabe zugrunde, ein System und ein Verfahren zur Übertragung von Daten über Datennetze, insbesondere Internet, anzugeben, das eine zeitlich unabhängige, bidirektionale Übertragung von Daten auch zwischen zwei mit Datennetzen, insbesondere Internet, koppelbaren Datenverarbeitungsvorrichtungen auch hinter Datenschutzeinrichtungen, insbesondere Firewalls, ermöglicht, auch wenn eine der beiden Datenverarbeitungsvorrichtungen im Datennetz, insbesondere Internet, nicht sichtbar ist.

Diese Aufgabe wird durch ein Verfahren mit den im Anspruch 1 genannten Merkmalen gelöst. Das Verfahren ist vorgesehen zur Übertragung von Daten über Datennetze, insbesondere Internet, bei dem von einem Client aus über eine Datenverbindung eine erste Verbindungsanforderung zum Aufbau mindestens eines ersten Übertragungskanals an einen Server gesendet wird, wobei mindestens ein Übertragungskanal permanent offen ist, welcher zu beliebiger Zeit zum, von Aktionen des Clients unabhängigen Senden von Daten vom Server zum Client über wenigstens ein Datennetz vorgesehen ist, wobei zur permanenten Aufrechterhaltung des Übertragungskanals zwischen Server und Client auch beim Nichtvorhandensein von Nutzdaten Scheindaten in regelmäßigen Intervallen vom Server an den Client übertragen werden.

Diese Aufgabe wird durch ein System mit den im Anspruch 12 genannten Merkmalen gelöst. Das System zur Übertragung von Daten über Datennetze, insbesondere Internet, enthält mindestens eine mit einem Datennetz, insbesondere Internet, koppelbare Datenverarbeitungsvorrichtung eines Client, wobei die Datenverarbeitungsvorrichtung zum Aufbau mindestens einer Datenverbindung in Form eines ersten Übertragungskanals an einen Server vorgesehen ist, wobei mindestens ein Übertragungskanal permanent offen ist, welcher zu beliebiger Zeit zum, von Aktionen des Clients unabhängigen Senden von Daten vom Server zum Client über wenigstens ein Datennetz vorgesehen ist, und wobei das System zur permanenten Aufrechterhaltung des Übertragungskanals zwischen Server und Client Mittel zur in regelmäßigen Intervallen vorgesehenen Übertragung von Scheindaten vom Server an den Client auch beim Nichtvorhandensein von Nutzdaten aufweist.

Der Erfindung liegt die Erkenntnis zugrunde, dass mit Hilfe des Internets eine echte "aktive" Datenverbindung zu einem, im Internet nicht sichtbaren Client nicht möglich ist, sondern lediglich eine Datenverbindung zwischen einem beliebigen mit dem Internet verbundenen Client mit jedem beliebigen, im Internet sichtbaren Server. Dieser Nachteil wird auf überraschend einfache Weise dadurch gelöst, dass vom Client aus zunächst ein erster Übertragungskanal zum Internet-Server eines Automatisierungssystems aufgebaut wird. Hierzu wird vom Client aus, der nach Herstellung der bidirektionalen Datenverbindungen als vollwertiges Bedien- und Beobachtungssystem des Automatisierungssystems dienen kann, eine erste Verbindungsanforderung an den Internet-Server des Automatisierungssystems gesendet. Der Internet-Server beantwortet diese Verbindungsanforderung und zur permanenten Offenhaltung dieser Datenverbindung überträgt der Internet-Server beispielsweise auch beim Nichtvorhandensein von Nutzdaten Scheindaten an den Client bzw. sendet Informationen an den Client, die dem Client mitteilen, dass noch eine Übertragung von Nutzdaten beabsichtigt ist. Scheindaten sind dabei Daten, die zum Zweck der Aufrechterhaltung der Datenverbindung vom Server selbst generiert und an den Client gesendet werden.
Hierdurch wird eine permanent offene Datenverbindung installiert, über die der Internet-Server und damit das Automatisierungssystem jederzeit und unabhängig von Aktionen des Clients asynchron Daten an den Client und damit an das B&B-System senden kann.

Unabhängig und parallel dazu können Client und Internet-Server auch konventionell im Internet miteinander kommunizieren, indem der Client jeweils einen neuen Request an den Internet-Server richtet, der von diesem mit einem entsprechenden Response beantwortet wird.

Somit steht ein System voneinander unabhängiger Datenverbindungen zur Verfügung, mittels derer sowohl der Client, also das B&B-System, wie auch das Automatisierungssystem von sich aus miteinander kommunizieren können. Zwischen Client und Server oder mit anderen Worten zwischen Bedien- und Beobachtungssystem und Automatisierungssystem wird funktional eine bidirektionale Datenverbindung sichergestellt, die insbesondere auch eine Datenübertragung vom Server aus an den Client ermöglicht, da der Server ständig über einen permanent offenen Übertragungskanal mit dem Client verbunden ist, so dass eine zeitlich voneinander unabhängige bidirektionale Datenübertragung in beiden Richtungen zwischen Client und Server ermöglicht wird. Eine derartige Datenverbindung ist besonders zum Bedienen und Beobachten eines Automatisierungssystems geeignet, wobei der Client als Bedien- und Beobachtungssystem fungieren kann, welches von jedem beliebigen, mit dem Internet verbundenen Rechner aus aktivierbar ist. Im Gegensatz zu konventionellen Internet-Datenverbindungen ergibt sich somit ein asynchrones Datenübertragungsverfahren, das vom Client nicht die Notwendigkeit fordert, im Internet sichtbar zu sein, oder einen sogenannten Web-Server (IIS = Internet Information Server) installiert zu haben. Dadurch wird es möglich, von jedem beliebigen Ort der Welt, vor und hinter Datenschutzeinrichtungen, insbesondere Firewalls, eine bidirektionale Datenverbindung zu einem Server aufzubauen. Da die Datenverbindung vom Client aus, d.h. vom B&B-System aus, aktiviert wird, ist es nicht erforderlich, dass der Server von sich aus aktiv eine Datenverbindung zum Client aufbaut. Darüber hinaus ist auch eine Änderung der Konfiguration des Clients nicht erforderlich.

Eine permanente Aufrechterhaltung einer Datenverbindung kann dadurch sichergestellt werden, dass zur Erhaltung mindestens eines Übertragungskanals auch beim Nichtvorhandensein von Nutzdaten Scheindaten übertragen werden.

Eine besonders vorteilhafte Ausgestaltung der Erfindung ist dadurch gekennzeichnet, dass die Scheindaten vom Server an den Client gesendet werden. Dabei hat es sich als besonders vorteilhaft erwiesen, dass beim Nichtvorhandensein von Nutzdaten alle 25-35 sec. Scheindaten vom Server zum Client übertragen werden, um die Datenverbindung offen zu halten.

Eine weitere vorteilhafte Ausgestaltung der Erfindung ist dadurch gekennzeichnet, dass zur Aufrechterhaltung einer permanenten Datenverbindung, insbesondere eines Übertragungskanals zwischen Server und Client, der Server dem Client Informationen sendet, die dem Client mitteilen, dass eine Übertragung von Daten beabsichtigt ist.

Eine weitere vorteilhafte Ausgestaltung der Erfindung ist dadurch gekennzeichnet, dass zur permanenten Aufrechterhaltung einer Datenverbindung insbesondere eines Übertragungskanals zwischen Server und Client, über den vom Server Datenmengen bis zu einer festgelegten Größe übertragen werden, vom Server vor Erreichung der festgelegten Datenmenge eine Aufforderung zu einer neuen Verbindungsanforderung an den Client gesendet wird und daraufhin vom Client eine neue Verbindungsanforderung zum Aufbau mindestens eines neuen Übertragungskanals an den Server gesendet wird. Als sehr vorteilhaft hat sich eine Größe von 15 - 25 MB für die zu übertragenden Datenmengen über einen Übertragungskanal erwiesen, da dies die Performance, bzw. die Antwortzeiten des Systems wegen der Kommunikation über Firewallrechner hinweg außerordentlich verbessert und damit das Kosten-/Nutzenverhältnis am effektivsten ist.

Eine weitere vorteilhafte Ausgestaltung der Erfindung ist dadurch gekennzeichnet, dass zur Steuerung der Datenübertragung ein Transportprotokoll, insbesondere ein Internet-Transportprotokoll vorgesehen ist. Dabei hat sich der Einsatz des Hypertext Transport Protocol (HTTP) als Transportprotokoll als besonders vorteilhaft erwiesen, da dessen Anwendung außerordentlich einfach und der Anpassungsaufwand sehr gering ist.

Eine besonders vorteilhafte Anwendung der Erfindung, unter Nutzung vorhandener Infrastrukturen, insbesondere Internet-Infrastrukturen für eine bidirektionale Datenübertragung, besteht darin, dass das Verfahren zum Bedienen und Beobachten beispielsweise eines Automatisierungssystems über wenigstens ein Datennetz, insbesondere über Internet, vorgesehen ist, da dadurch beispielsweise Ferndiagnosen sehr einfach realisiert werden können, wodurch die Analyse von auftretenden Fehlern und deren Behebung im laufenden Betrieb von beispielsweise Automatisierungssystemen an räumlich weit voneinander entfernten Orten kostengünstig durchgeführt werden können.

Eine weitere vorteilhafte Ausgestaltung der Erfindung ist dadurch gekennzeichnet, dass der Client nicht im Internet sichtbar sein, bzw. keinen Internet Information Server (IIS) installiert haben muß.

Eine Verbindung der Automatisierungs- und Kommunikationstechnik kann auf einfache Weise derart gestaltet sein, dass das Bedien- und Beobachtungssystem des Client die Bereitstellung mindestens eines Übertragungskanals als verteiltes Objekt, insbesondere als DCOM-Objekt initiiert und dass der Verbindungsaufbau zum Automatisierungssystem über einen DCOM-Server erfolgt.

Im folgenden wird die Erfindung anhand der in den Figuren dargestellten Ausführungsbeispiele näher beschrieben und erläutert.

Es zeigen:
- FIG 1: ein Blockschaltbild eines Ausführungsbeispiels eines Automatisierungssystems mit Internet-Kopplung zum Bedienen und Beobachten und
- FIG 2: eine schematische, zeitliche Darstellung für mögliche Nutzdatenkommunikation zwischen Client und Automatisierungssystem.

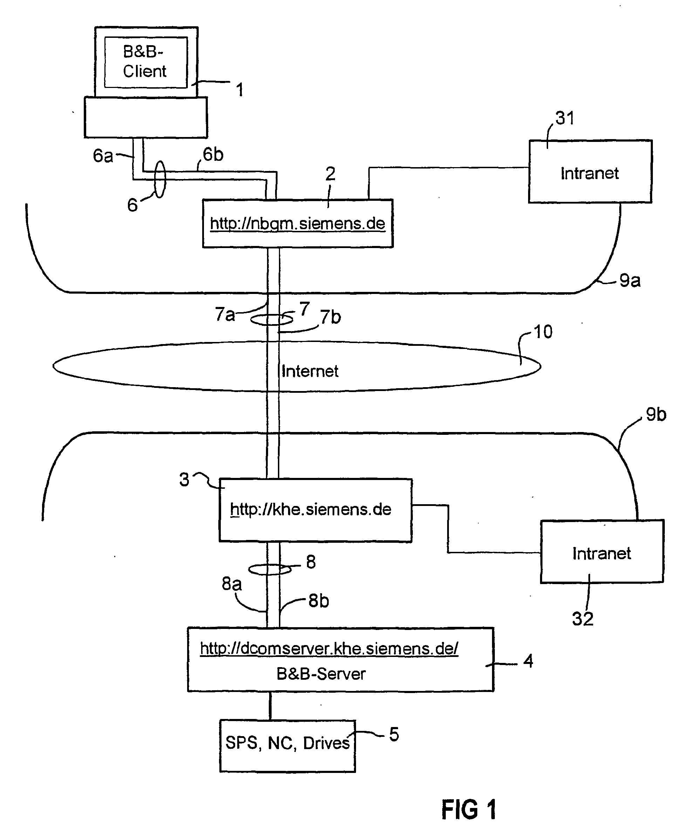

Figur 1 zeigt ein Ausführungsbeispiel eines Systems zum Bedienen und Beobachten von Automatisierungssystemen 5, welche beispielsweise speicherprogrammierbare Steuerungen (SPS), numerische Steuerungen (NC) und/oder Antriebe (Drives) aufweisen. Das System weist ein Bedien- und Beobachtungssystem 1 (B&B-Client) auf, welches über ein internes Datennetz 6, z.B. Ethernet mit einem Firewall-Rechner 2 gekoppelt ist. Dem Bedien- und Beobachtungssystem 1, welches im folgenden abkürzend auch als B&B-System 1 bezeichnet wird, ist eine lokale Intranet-Adresse zugeordnet, die im Internet nicht bekannt sein muß. Mit Hilfe der Linie 9a ist in Fig. 1 der Firewall des Firewall-Rechners 2 angedeutet, der das interne Kommunikationsnetz 31 (= Intranet 31) des Firewall-Servers 2 umgibt. Mit dem Bezugszeichen 10 ist das weltweite Datenkommunikationsnetz Internet gekennzeichnet. Der Firewall-Rechner 2 ist über eine Verbindungsleitung 7, z.B. ISDN mit dem Internet 10 koppelbar. Das Automatisierungssystem 5 ist über einen Internet-Server 4, der als B&B-Server 4 für das Automatisierungssystem 5 dient und der beispielsweise die Internet-Adresse dcomserver.khe.siemens.de/ aufweist, über eine Verbindungsleitung 8 und jeweils einen zweiten Firewall-Rechner 3 mit dem Internet 10 koppelbar. Die zweite Firewall 9b umgibt das, dem Firewall-Rechner 3 zugeordnete Intranet 32. Der Firewall-Rechner 3 ist im Internet 10 beispielsweise unter der Internet-Adresse khe.siemens.de sichtbar.
Die Datenverbindung 6, 7, 8 zwischen dem Client 1 und dem Server 4 ist zur besseren Darstellung und Erläuterung der jeweiligen Senderichtung bei der Kommunikation zwischen Client 1 und Server 4 und umgekehrt in der Figur 1 in Form zweier Teilkanäle dargestellt. Diese Teilkanäle beinhalten einen ersten Übertragungskanal 6a, 7a, 8a, der die Kommunikationsrichtung vom Client 1 zum Server 4 symbolisiert und einen zweiten Übertragungskanal 6b, 7b, 8b, der die Kommunikationsrichtung vom Server 4 zum Client 1 symbolisiert. Physikalisch sind die beiden dargestellten Teilkanäle ein einziger Übertragungskanal, d.h. für eine Antwort vom Server 4 auf eine zugehörige Anfrage vom Client 1 an den Server 4 wird derselbe physikalische Übertragungskanal verwendet.

Im folgenden soll anhand eines Verbindungsaufbaus zwischen dem Client 1 und dem B&B-Server 4 beispielhaft der Aufbau einer zeitlich voneinander unabhängigen, bidirektionalen Sende- und Empfangsverbindung zwischen dem Client 1 und dem B&B Server 4 über das Internet 10 erläutert werden. Hierzu kommt ein asynchrones Verfahren zum Einsatz, welches es ermöglicht, dass der B&B Server 4 Daten an den Client 1 senden kann, unabhängig von Aktionen des Clients 1, der selbst im Internet 10 nicht sichtbar zu sein braucht, d.h. über keine eigene gültige Internet-Adresse verfügt.
Hierzu schickt der Client 1 eine erste Anfrage, einen sogenannten Request, über Internet 10 an den B&B-Server 4 über den ersten Übertragungskanal 6a, 7a, 8a, worauf der B&B-Server 4 mit einer Antwort, einem sogenannten Response, über den zweiten Übertragungskanal 6b, 7b, 8b reagiert. Zur Vermeidung einer zeitlichen Unterbrechung der Antwort, und damit eines Abbruchs der Datenverbindung 6, 7, 8 wird die Dauer der Antwort "unendlich" lang ausgedehnt. Hierzu wird dem System beispielsweise mitgeteilt, dass noch weitere Daten geschickt werden sollen. Hierdurch ergibt sich eine permanent offene Datenverbindung 6, 7, 8, über die der B&B-Server 4 und damit das Automatisierungssystem 5 jederzeit und unabhängig von Aktionen des Clients 1 asynchron Daten an den Client 1 und damit an das B&B-System 1 senden kann. Um die Datenverbindung 6, 7, 8 permanent offen zu halten, ist es beispielsweise auch möglich, Scheindaten in regelmäßigen Intervallen, vorteilhafterweise alle 25-35 sec vom Server 4 an den Client 1 zu senden.

Unabhängig von dieser permanent offenen Datenverbindung 6,7,8 kann zwischen dem Client 1 und dem B&B-Server 4 darüber hinaus eine "normale" Kommunikation über das Internet 10 stattfinden, d.h. der Client 1 sendet einen Request an den B&B-Server 4 über einen neuen Übertragungskanal und der B&B-Server 4 beantwortet diesen Request mit einem entsprechenden Response über diesen Übertragungskanal. Nach erfolgter Übertragung der Daten wird der neue Übertragungskanal wieder geschlossen. Somit können der Client 1 sowie der B&B-Server 4 zeitlich unabhängig voneinander bidirektional Daten senden und empfangen.
Zur Steuerung der Datenübertragung wird ein Transportprotokoll, insbesondere ein Internet-Transportprotokoll eingesetzt. Vorteilhafterweise wird dazu das Hypertext Transport Protocol (HTTP) als Transportprotokoll verwendet.

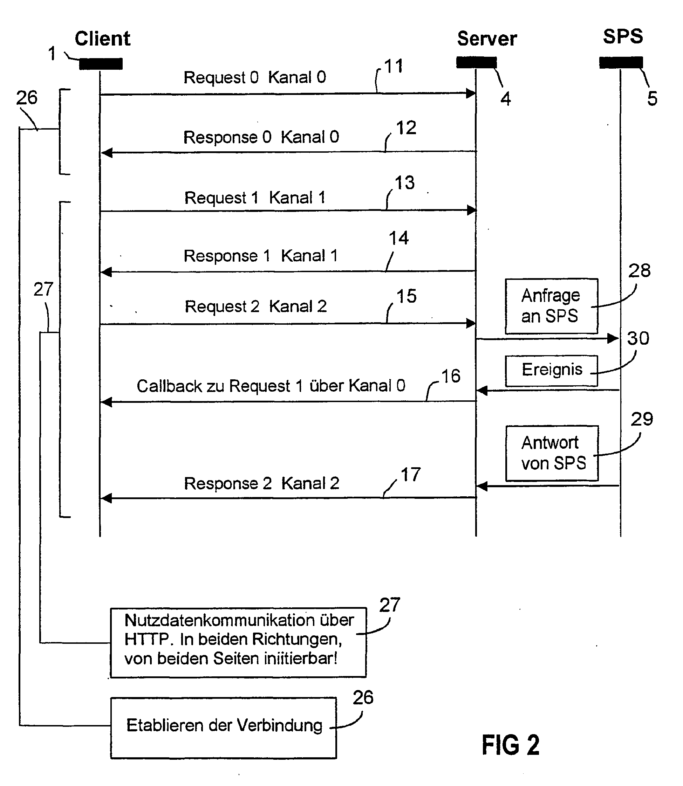

Fig. 2 zeigt den zeitlichen Ablauf der Etablierung 26 einer permanent offenen Datenverbindung 6, 7, 8 zwischen einem Client 1 und einem B&B-Server 4, an den ein beispielhaft als SPS (= Speicherprogrammierbare Steuerung) bezeichnetes Automatisierungssystem 5 angeschlossen ist. Die Darstellung erfolgt mit Hilfe der UML-Notation (Unified Modelling Language). Weiterhin zeigt Fig. 2 die bidirektionale Kommunikation, die nach Etablierung der Datenverbindung zeitlich unabhängig voneinander von Client 1 und B&B-Server 4 initiiert werden kann. Der zeitliche Ablauf zur Etablierung der Datenverbindung ist folgender: Der Client 1 stellt einen Request 11 an den Server 4, der diesen mit einer Response 12 beantwortet, wobei diese Datenverbindung nicht abgebaut wird. Dazu wird dem Client 1 beispielsweise mitgeteilt, dass noch weitere Daten geschickt werden sollen, wodurch diese Datenverbindung permanent offen gehalten wird. Um die Datenverbindung permanent offen zu halten, ist es beispielsweise auch möglich, Scheindaten in regelmäßigen Intervallen, insbesondere alle 25-35 sec vom Server 4 an den Client 1 zu senden, falls keine Nutzdaten gesendet werden können.
Dadurch kann der Server 4 sowie das mit dem Server 4 gekoppelte Automatisierungssystem 5 zu beliebiger Zeit unabhängig vom Client 1 Daten an den Client 1 senden. Nach der Response 12 des Servers 4 schickt der Client 1 einen neuen Request 13 an den Server 4. Dazu wird eine neue Datenverbindung aufgebaut. Der Server 4 wiederum antwortet mit einer Response 14 (= synchrones Verhalten). Diese Datenverbindung wird nach erfolgter Datenübertragung wieder geschlossen. Bei Bedarf sendet der Client 1 beispielsweise einen Request 15 über den Server 4, der als Anfrage 28 an die SPS 5 weitergeleitet wird. Die SPS sendet eine Antwort 29 an den Server 4 zurück, der diese mit einer Response 17 an den Client 1 weiterleitet (= synchrones Verhalten). Diese Datenverbindung wird nach erfolgter Datenübertragung ebenfalls wieder geschlossen.

Unabhängig und parallel dazu kann der Server 4 dem Client 1 über die permanent offene Datenverbindung 12 eine Nachricht mitteilen, z.B. eine Reaktion auf ein Ereignis 30 in der SPS 5, ohne dass vorher der Client 1 eine Anfrage gestellt hat (= asynchroner Callback 16). Dieses wäre bei einer "normalen" HTTP-Verbindung nicht möglich. Dieser asynchrone Callback 16 ist insbesondere zeitlich auch zwischen einem Request 15 und einer noch nicht erfolgten Response 17 möglich.

Insgesamt ergibt sich somit eine Nutzdatenkommunikation 27 über Internet in beide Richtungen, die von beiden Seiten aus iniziierbar und zeitlich voneinander unabhängig ist. Damit wird es möglich, vorhandene Kommunikationswege des Internet auch im Bereich der Automatisierungstechnik in gewohnter Weise für Bedien- und Beobachtungszwecke als HMI-Interface (Human Machine Interface) zu nutzen. Als vorteilhafte Anwendung kommt beispielsweise das Bedien- und Beobachtungssystem WinCC der Fa. Siemens in Betracht. Das erfindungsgemäße System und Verfahren ermöglicht die Übertragung von DCOM-Aufträgen vom Client 1 zum Internet-Server 4. Das Besondere dabei ist, dass es das Verfahren erlaubt, dass der Internet-Server 4 DCOM-Ereignisse, so genannte Events an seinen Client 1 senden kann, ohne dass dieser eine "echte", d.h. im Internet sichtbare Adresse besitzt. Der Client 1 braucht also nicht im Internet sichtbar sein. Er braucht auch keinen Internet Information Server (IIS) installiert zu haben. Auf der Client-Seite sind somit keine zusätzlichen Kosten erforderlich, da Internet-Browser wie beispielsweise der Internet-Explorer der Firma Microsoft oder der Netscape Communicator der Fa. Netscape überall verfügbar sind. Für einen Datenaustausch zwischen Automatisierungssystem und B&B-Anwender beispielsweise für Alarmierungszwecke sind somit keine speziellen Sonderlösungen erforderlich.

Zusammenfassend betrifft die Erfindung somit ein System sowie ein Verfahren zur Übertragung von Daten über Datennetze, insbesondere Internet, insbesondere von Daten zum Bedienen und Beobachten eines Automatisierungssystems 5. Für eine bidirektionale Nutzdatenverbindung auch hinter Firewalls über Internet in beiden Richtungen auch von einem Client 1 aus, der nicht als Server im Internet sichtbar ist, wird ein Verfahren bzw. ein System vorgeschlagen, bei dem von einer ersten Datenverarbeitungsvorrichtung eines Client 1, insbesondere von einem Bedien- und Beobachtungssystem 1, aus über eine Datenverbindung 6, 7, 8, insbesondere Internetverbindung, eine erste Verbindungsanforderung zum Aufbau eines ersten Übertragungskanals 6a, 7a, 8a an einen B&B-Server 4 eines Automatisierungssystems 5 gesendet wird. Eine Response dazu erfolgt über einen zweiten Übertragungskanal 6b, 7b, 8b. Eine zeitlich unbegrenzte Nutzungsdauer der Datenverbindung 6, 7, 8 wird dadurch sichergestellt, dass zur Erhaltung der Datenverbindung 6, 7, 8 beispielsweise auch beim Nichtvorhandensein von Nutzdaten Scheindaten übertragen werden, oder, dass Informationen an den Client 1 gesendet werden, die dem Client 1 mitteilen, dass noch eine Übertragung von Nutzdaten beabsichtigt ist. Hierdurch ergibt sich eine permanent offene Datenverbindung 6,7,8, über die der B&B-Server 4 und damit das Automatisierungssystem 5 jederzeit und unabhängig von Aktionen des Clients 1 asynchron Daten an den Client 1 und damit an das B&B-System 1 senden kann.

## Patentansprüche

1. Verfahren zur Übertragung von Daten über Datennetze, insbesondere Internet (10), bei dem von einem Client (1) aus über eine Datenverbindung (6,7,8) eine erste Verbindungsanforderung zum Aufbau mindestens eines ersten Übertragungskanals (6a,7a,8a) an einen Server (4) gesendet wird, wobei
mindestens ein Übertragungskanal permanent offen ist, welcher zu beliebiger Zeit zum, von Aktionen des Clients (1) unabhängigen Senden von Daten vom Server (4) zum Client (1) über wenigstens ein Datennetz vorgesehen ist, **dadurch gekennzeichnet, dass** zur permanenten Aufrechterhaltung des Übertragungskanals zwischen Server (4) und Client (1) auch beim Nichtvorhandensein von Nutzdaten Scheindaten in regelmäßigen Intervallen vom Server (4) übertragen werden.

2. Verfahren nach Anspruch 1,
**dadurch gekennzeichnet,**
**dass** das Verfahren zum Bedienen und Beobachten eines Automatisierungssystems (5) über mindestens eines der Datennetze, insbesondere über Internet (10), vorgesehen ist.

3. Verfahren nach einem der vorstehenden Ansprüche,
**dadurch gekennzeichnet,**
**dass** beim Nichtvorhandensein von Nutzdaten die Scheindaten alle 25-35 sec. vom Server (4) zum Client (1) übertragen werden.

4. Verfahren nach einem der vorstehenden Ansprüche,
**dadurch gekennzeichnet,**
**dass** zur permanenten Aufrechterhaltung des Übertragungskanals der Server (4) dem Client (1) Informationen sendet, die dem Client (1) mitteilen, dass eine Übertragung von Daten beabsichtigt ist.

5. Verfahren nach einem der vorstehenden Ansprüche,
**dadurch gekennzeichnet,**
**dass** zur permanenten Aufrechterhaltung des Übertragungskanals, über den vom Server (4) Datenmengen bis zu einer festgelegten Größe an den Client (1) übertragen werden, vom Server (4) vor Erreichung der festgelegten Datenmenge eine Aufforderung zu einer neuen Verbindungsanforderung an den Client (1) gesendet wird und daraufhin vom Client (1) eine neue Verbindungsanforderung zum Aufbau mindestens eines neuen Übertragungskanals an den Server (4) gesendet wird.

6. Verfahren nach einem der vorstehenden Ansprüche,
**dadurch gekennzeichnet,**
**dass** die zu übertragenden Datenmengen über den Übertragungskanal eine Größe von 15 - 25 MB aufweisen.

7. Verfahren nach einem der vorstehenden Ansprüche,
**dadurch gekennzeichnet,**
**dass** zur Steuerung der Datenübertragung ein Transportprotokoll, insbesondere ein Internet-Transportprotokoll vorgesehen ist.

8. Verfahren nach Anspruch 7,
**dadurch gekennzeichnet,**
**dass** als Transportprotokoll ein Hypertext-Transport-Protocol vorgesehen ist.

9. Verfahren nach einem der vorstehenden Ansprüche,
**dadurch gekennzeichnet,**
**dass** der Client (1) nicht im Internet (10) sichtbar ist.

10. Verfahren nach einem der Ansprüche 1 bis 9
**dadurch gekennzeichnet,**
**dass** der Client (1) keinen Internet Information Server installiert hat.

11. Verfahren nach Anspruch 2,
**dadurch gekennzeichnet,**
**dass** ein Bedien- und Beobachtungssystem des Client (1) die Bereitstellung eines Übertragungskanals als verteiltes Objekt, insbesondere als DCOM-Objekt, initiiert und dass ein Verbindungsaufbau zum Automatisierungssystem (5) über einen DCOM-Server erfolgt.

12. System zur Übertragung von Daten über Datennetze, insbesondere Internet (10), mit mindestens einem Server (4), mit mindestens einem Client (1), mit mindestens einem Datennetz, mit mindestens einer mit dem mindestens einen Datennetz koppelbaren Datenverarbeitungsvorrichtung des Client (1), wobei die Datenverarbeitungsvorrichtung zum Aufbau mindestens eines ersten Übertragungskanals (6a,7a,8a) an einen Server (4) vorgesehen ist, wobei
mindestens ein Übertragungskanal permanent offen ist, welcher zu beliebiger Zeit zum, von Aktionen des Clients (1) unabhängigen Senden von Daten vom Server (4) zum Client (1) über wenigstens ein Datennetz vorgesehen ist, **dadurch gekennzeichnet, dass** das System zur permanenten Aufrechterhaltung des Übertragungskanals zwischen Server (4) und Client (1) Mittel zur in regelmäßigen Intervallen vorgesehenen Übertragung von Scheindaten vom Server (4) an den Client (1) auch beim Nichtvorhandensein von Nutzdaten aufweist.

13. System nach Anspruch 12,
**dadurch gekennzeichnet,**
**dass** das System zum Bedienen und Beobachten eines Automatisierungssystems (5) über Internet (10) vorgesehen ist.

14. System nach einem der Ansprüche 12 oder 13,
**dadurch gekennzeichnet,**
**dass** das System zur permanenten Aufrechterhaltung des Übertragungskanals Mittel aufweist, Informationen vom Server (4) zum Client (1) zu senden, die dem Client (1) mitteilen, dass eine Übertragung von Daten beabsichtigt ist

15. System nach einem der Ansprüche 12 bis 14,
**dadurch gekennzeichnet,**
**dass** das System zur permanenten Aufrechterhaltung des Übertragungskanals, über den vom Server (4) Datenmengen bis zu einer festgelegten Größe an den Client (1) übertragen werden, Mittel aufweist, die vor Erreichung der festgelegten Datenmenge eine Aufforderung zu einer neuen Verbindungsanforderung vom Server (4) an den Client (1) senden und daraufhin den Client (1) veranlassen, eine neue Verbindungsanforderung zum Aufbau mindestens eines neuen Übertragungskanals an den Server (4) zu senden.

16. System nach einem der Ansprüche 12 bis 15,
**dadurch gekennzeichnet,**
**dass** das System als Mittel zur Steuerung der Datenübertragung ein Transportprotokoll, insbesondere ein Internet-Transportprotokoll, verwendet.

17. System nach Anspruch 16,
**dadurch gekennzeichnet,**
**dass** das System als Mittel zur Steuerung der Datenübertragung als Transportprotokoll ein Hypertext-Transport-Protocol verwendet.

18. System nach Anspruch 12,
**dadurch gekennzeichnet,**
**dass** ein Bedien-und Beobachtungssystem des Client (1) die Bereitstellung eines Übertragungskanals als verteiltes Objekt, insbesondere als DCOM-Objekt, initiiert und dass ein Verbindungsaufbau zum Automatisierungssystem (5) über einen DCOM-Server erfolgt.

## Claims

1. Method for transmitting data via data networks, particularly the Internet (10), in which a client (1) is used to send a first connection request for setting up at least one first transmission channel (6a, 7a, 8a) to a server (4) via a data link (6, 7, 8), where at least one transmission channel is permanently open which is provided for sending data from the server (4) to the client (1) via at least one data network at any time independently of actions by the client (1),
**characterized**
**in that** the transmission channel is permanently maintained between server (4) and client (1) by virtue of dummy data being transmitted at regular intervals from the server (4) even in the absence of user data.

2. Method according to Claim 1,
**characterized**
**in that** the method for operating and observing an automation system (5) is provided via at least one of the data networks, particularly via the Internet (10).

3. Method according to one of the preceding claims,
**characterized**
**in that**, in the absence of user data, the dummy data are transmitted from the server (4) to the client (1) every 25-35 seconds.

4. Method according to one of the preceding claims,
**characterized**
**in that** the transmission channel is permanently maintained by virtue of the server (4) sending the client (1) information which notifies the client (1) that transmission of data is intended.

5. Method according to one of the preceding claims,
**characterized**
**in that** the transmission channel which the server (4) uses to transmit volumes of data up to a stipulated size to the client (1) is permanently maintained by virtue of the server (4) sending a request for a new connection request to the client (1) before the stipulated volume of data is reached, and the client (1) then sending a new connection request for setting up at least one new transmission channel to the server (4).

6. Method according to one of the preceding claims,
**characterized**
**in that** the volumes of data to be transmitted via the transmission channel have a size of 15 - 25 MB.

7. Method according to one of the preceding claims,
**characterized**
**in that** a transport protocol, particularly an Internet transport protocol, is provided for controlling the data transmission.

8. Method according to Claim 7,
**characterized**
**in that** the transport protocol provided is a hypertext transport protocol.

9. Method according to one of the preceding claims,
**characterized**
**in that** the client (1) is not visible on the Internet (10).

10. Method according to one of Claims 1 to 9,
**characterized**
**in that** the client (1) has not installed an Internet information server.

11. Method according to Claim 2,
**characterized**
**in that** an operating and observation system on the client (1) initiates the provision of a transmission channel as a distributed object, particularly as a DCOM object, and in that connection setup to the automation system (5) is effected via a DCOM server.

12. System for transmitting data via data networks, particularly the Internet (10), having at least one server (4), having at least one client (1), having at least one data network, having at least one data processing apparatus, which can be linked to the at least one data network, on the client (1), where the data processing apparatus (1) is provided for setting up at least one first transmission channel (6a, 7a, 8a) to a server (4), with at least one transmission channel being permanently open which is provided for sending data from the server (4) to the client (1) via at least one data network at any time independently of actions by the client (1),
**characterized**
**in that**, for the purpose of permanently maintaining the transmission channel between server (4) and client (1), the system has means for transmitting dummy data at regular intervals from the server (4) to the client (1) even in the absence of user data.

13. System according to Claim 12,
**characterized**
**in that** the system is provided for operating and observing an automation system (5) via the Internet (10).

14. System according to one of Claims 12 or 13,
**characterized**
**in that**, for the purpose of permanently maintaining the transmission channel, the system has means for sending information from the server (4) to the client (1) which notifies the client (1) that transmission of data is intended.

15. System according to one of Claims 12 to 14,
**characterized**
**in that**, for the purpose of permanently maintaining the transmission channel which the server (4) uses to transmit volumes of data up to a stipulated size to the client (1), the system has means which send a request for a new connection request from the server (4) to the client (1) before the stipulated volume of data is reached, and then prompt the client (1) to send a new connection request for setting up at least one new transmission channel to the server (4).

16. System according to one of Claims 12 to 15,
**characterized**
**in that** the means used by the system for controlling the data transmission is a transport protocol, particularly an Internet transport protocol.

17. System according to Claim 16,
**characterized**
**in that** the means used by the system for controlling the data transmission is a hypertext transport protocol as the transport protocol.

18. System according to Claim 12,
**characterized**
**in that** an operating and observation system on the client (1) initiates the provision of a transmission channel as a distributed object, particularly as a DCOM object, and in that connection setup to the automation system (5) is effected via a DCOM server (4).

## Revendications

1. Procédé de transmission de données par l'intermédiaire de réseaux de données, notamment Internet (10), dans lequel un client (1) envoie à un serveur (4) par l'intermédiaire d'une liaison de données (6, 7, 8) une première demande de liaison pour l'établissement d'au moins un premier canal de transmission (6a, 7a, 8a) et dans lequel au moins un canal de transmission est ouvert en permanence, lequel est prévu pour envoyer à n'importe quel moment et indépendamment des actions du client (1) des données du serveur (4) au client (1) par l'intermédiaire d'au moins un réseau de données, **caractérisé par le fait que**, pour le maintien permanent du canal de transmission entre serveur (4) et client (1), en l'absence de données utiles, des données fictives sont aussi transmises à intervalles réguliers par le serveur (4).

2. Procédé selon la revendication 1, **caractérisé par le fait que** le procédé est prévu pour commander et observer un système automatisé (5) par l'intermédiaire d'au moins l'un des réseaux de données, notamment par l'intermédiaire d'Internet (10).

3. Procédé selon l'une des revendications précédentes, **caractérisé par le fait que**, en l'absence de données utiles, les données fictives sont transmises toutes les 25 à 35 s du serveur (4) au client (1).

4. Procédé selon l'une des revendications précédentes, **caractérisé par le fait que**, pour le maintien permanent du canal de transmission, le serveur (4) envoie au client (1) des informations qui indiquent au client (1) qu'une transmission de données est prévue.

5. Procédé selon l'une des revendications précédentes, **caractérisé par le fait que**, pour le maintien permanent du canal de transmission par l'intermédiaire duquel des quantités de données jusqu'à une dimension spécifiée sont transmises par le serveur (4) au client (1), le serveur (4) avant d'atteindre la quantité de données spécifiée envoie au client (1) une incitation à une nouvelle demande de liaison puis le client (1) envoie au serveur (4) une nouvelle demande de liaison pour l'établissement d'au moins un nouveau canal de transmission.

6. Procédé selon l'une des revendications précédentes, **caractérisé par le fait que** les quantités de données à transmettre par l'intermédiaire du canal de transmission ont une dimension de 15 à 25 MB.

7. Procédé selon l'une des revendications précédentes, **caractérisé par le fait que**, pour la commande de la transmission de données, il est prévu un protocole de transport, notamment un protocole de transport Internet.

8. Procédé selon la revendication 7, **caractérisé par le fait qu'**un protocole de transport dit hypertexte est prévu comme protocole de transport.

9. Procédé selon l'une des revendications précédentes, **caractérisé par le fait que** le client (1) n'est pas visible dans Internet (10).

10. Procédé selon l'une des revendications 1 à 9, **caractérisé par le fait que** le client (1) n'a pas installé de serveur d'information Internet.

11. Procédé selon la revendication 2, **caractérisé par le fait qu'**un système de commande et d'observation du client (1) déclenche la fourniture d'un canal de transmission comme objet réparti, notamment comme objet DCOM, et qu'un établissement de liaison vers le système automatisé (5) s'effectue par l'intermédiaire d'un serveur DCOM.

12. Système pour la transmission de données par l'intermédiaire de réseaux de données, notamment Internet (10), avec au moins un serveur (4), avec au moins un client (1), avec au moins un réseau de données, avec au moins un dispositif de traitement de données du client (1) pouvant être couplé au réseau de données ou aux réseaux de données, le dispositif de traitement de données étant prévu pour l'établissement d'au moins un premier canal de transmission (6a, 7a, 8a) vers un serveur (4), au moins un canal de transmission étant ouvert en permanence, lequel est prévu pour envoyer à n'importe quel moment et indépendamment des actions du client (1) des données du serveur (4) au client (1) par l'intermédiaire d'au moins un réseau de données, **caractérisé par le fait que** le système comporte pour le maintien permanent du canal de transmission entre serveur (4) et client (1) des moyens pour la transmission prévue à intervalles réguliers de données fictives du serveur (4) au client (1) même en l'absence de données utiles.

13. Système selon la revendication 12, **caractérisé par le fait que** le système est prévu pour commander et observer un système automatisé (5) par l'intermédiaire d'Internet (10).

14. Système selon l'une des revendications 12 ou 13, **caractérisé par le fait que** le système comporte pour le maintien permanent du canal de transmission des moyens pour envoyer du serveur (4) au client (1) des informations qui indiquent au client (1) qu'une transmission de données est prévue.

15. Système selon l'une des revendications 12 à 14, **caractérisé par le fait que** le système comporte pour le maintien permanent du canal de transmission par l'intermédiaire duquel des quantités de données jusqu'à une dimension spécifiée sont transmises par le serveur (4) au client (1) des moyens qui, avant d'atteindre la quantité de données spécifiée, envoient du serveur (4) au client (1) une incitation à une nouvelle demande de liaison puis qui font que le client (1) envoie au serveur (4) une nouvelle demande de liaison pour l'établissement d'au moins un nouveau canal de transmission.

16. Système selon l'une des revendications 12 à 15, **caractérisé par le fait que** le système utilise comme moyen pour la commande de la transmission de données un protocole de transport, notamment un protocole de transport Internet.

17. Système selon la revendication 16, **caractérisé par le fait que** le système utilise comme moyen pour la commande de la transmission de données, comme protocole de transport, un protocole de transport dit hypertexte.

18. Système selon la revendication 12, **caractérisé par le fait qu'**un système de commande et d'observation du client (1) déclenche la fourniture d'un canal de transmission comme objet réparti, notamment comme objet DCOM, et qu'un établissement de liaison vers le système automatisé (5) s'effectue par l'intermédiaire d'un serveur DCOM.
